Europäisches Patentamt

European Patent Office

Office européen des brevets

(11) Numéro de publication: **0 065 335**
**B1**

FASCICULE DE BREVET EUROPEEN

(45) Date de publication du fascicule du brevet: **27.12.84**

(51) Int. Cl.³: **H 04 M 9/08,** H 04 R 3/02

(21) Numéro de dépôt: **82200544.3**

(22) Date de dépôt: **06.05.82**

(54) **Dispositif destiné à éviter des oscillations entretenues gênantes dans un système bouclé et poste téléphonique à haut-parleur utilisant ce dispositif.**

(30) Priorité: **08.05.81 FR 8109190**
**12.10.81 FR 8119155**

(43) Date de publication de la demande:
**24.11.82 Bulletin 82/47**

(45) Mention de la délivrance du brevet:
**27.12.84 Bulletin 84/52**

(84) Etats contractants désignés:
**BE CH DE FR GB IT LI SE**

(56) Documents cités:
**DE-B-1 156 113**
**FR-A-2 370 376**
**GB-A-1 349 734**

(73) Titulaire: **TELECOMMUNICATIONS RADIOELECTRIQUES ET TELEPHONIQUES T.R.T.**
**88, rue Brillat Savarin**
**F-75013 Paris (FR)**

(72) Inventeur: **Ferrieu, Gilbert, Marie Marcel**
**SOCIETE CIVILE S.P.I.D. 209 rue de l'Université**
**F-75007 Paris (FR)**
Inventeur: **Hetet, Yves, Jean, François**
**SOCIETE CIVILE S.P.I.D. 209 rue de l'Université**
**F-75007 Paris (FR)**
Inventeur: **Balch, Jacques, Yves**
**SOCIETE CIVILE S.P.I.D. 209 rue de l'Université**
**F-75007 Paris (FR)**

(74) Mandataire: **Chaffraix, Jean et al**
**Société Civile S.P.I.D. 209, rue de l'Université**
**F-75007 Paris (FR)**

Courier Press, Leamington Spa, England.

EP 0 065 335 B1

## Description

L'invention concerne un dispositif destiné à éviter des oscillations entretenues gênantes dans un système bouclé et comportant un amplificateur à gain réglable inséré dans un premier trajet faisant partie de la boucle dudit système.

Parmi les systèmes bouclés où peuvent se produire des oscillations entretenues gênantes, on trouve par exemple les systèmes d'asservissement de grandeurs électriques, mécaniques ou physiques. On sait que lors de la conception de ces systèmes, on doit veiller à respecter des conditions de gain et de phase dans la boucle d'asservissement pour éviter des oscillations entretenues dans la boucle. Mais on n'est jamais certain qu'à la suite de circonstances non prévues, produisant par exemple des couplages parasites ou des perturbations brusques, des auto-oscillations ne prennent naissance et n'atteignent des amplitudes élevées et même dangereuses dans certains systèmes. Un autre genre de système bouclé est un système électro-acoustique comprenant par exemple un microphone et un haut-parleur couplés d'une manière ou d'une autre par voie électrique; si ces deux transducteurs sont d'autre part couplés par voie acoustique, il en résulte une boucle électro-acoustique dans laquelle peuvent prendre naissance des oscillations d'amplitude élevée, produisant des sifflements inacceptables pour un auditeur. Ce phénomène connu sous le nom d'effet Larsen peut se produire par exemple dans les installations de sonorisation ou dans les postes téléphoniques munis de haut-parleurs.

Pour éviter des oscillations dans une boucle électro-acoustique, les procédés généralement utilisés consistent à prévoir dans la boucle au moins un circuit d'amplification ou d'atténuation réglable, commandé selon différents critères pour que le gain dans la boucle reste inférieur à l'unité. Ainsi, un procédé utilisé dans les postes téléphoniques à haut-parleur consiste à détecter par deux détecteurs d'enveloppe si le signal de parole est présent dans la voie de haut-parleur ou dans la voie du microphone et à commander une augmentation de gain dans la voie utile et une diminution de gain dans l'autre voie. Ces modifications de gain qui se succèdent dans l'une et l'autre voie au cours d'une conversation sont très désagréables pour les interlocuteurs et, en outre, ce genre de procédé n'est pas très efficace pour les couplages acoustiques importants, puisque les commandes de gain ne dépendent pratiquement pas du coefficient de couplage acoustique.

Dans un autre procédé decrit dans la demande de brevet français publiée sous le numéro 2 461 412, on utilise également deux détecteurs d'enveloppe des signaux dans les deux voies et un seul amplificateur dans la voie du haut-parleur, dont le gain est réglé par un signal de différence entre le signal de sortie du détecteur d'enveloppe de la voie du microphone et le signal de sortie du détecteur d'enveloppe de la voie de haut-parleur, pondéré par un certain coefficient. Pour des distances supérieures à une certaine distance minimale entre haut-parleur et microphone, le gain de l'amplificateur est dans un rapport constant avec le coefficient de couplage acoustique et ce n'est qu'au-delà de cette distance minimale que les oscillations peuvent être évitées par ce seul procédé. En outre, l'utilisation même de détecteurs d'enveloppe rend encore l'écoute dépendante des signaux de parole et notamment du signal de parole produit par un locuteur parlant devant le microphone.

La présente invention fournit un moyen différent d'éviter des oscillations de boucle gênantes, en palliant les inconvénients et les limitations des procédés connus. L'invention s'applique non seulement aux boucles électroacoustiques, mais également à tous les systèmes bouclés tels que les systèmes d'asservissement.

L'idée de base de l'invention est, lorsque des conditions d'oscillations de boucle sont créées, de forcer des oscillations de boucle à traverser un deuxième trajet ayant au moins une partie distincte du premier trajet et de contrôler ces oscillations au moyen d'un régulateur de façon à les amener à un niveau constant, faible et non gênant dans le reste de la boucle.

Conformément à l'invention, entre les bornes d'entrée et de sortie du premier trajet est formé un deuxième trajet ayant au moins une partie qui est distincte du premier trajet, des moyens étant prévus pour que le gain dans le deuxième trajet reste supérieur au gain dans le premier trajet dans toute la bande de fréquences où des oscillations sont susceptibles de se produire, un signal prélevé dans ladite partie du deuxième trajet distincte du premier trajet étant appliqué à l'entrée d'un régulateur linéaire commandant au moins un amplificateur à gain réglable faisant partie du deuxième trajet de façon à maintenir constant le signal à l'entrée dudit régulateur au-delà d'une certaine valeur dudit signal prélevé dans le deuxième trajet.

Dans certains modes de réalisation de l'invention le deuxième trajet est entièrement distinct du premier trajet et comporte un amplificateur à gain réglable dont le signal de sortie est appliqué à l'entrée dudit régulateur linéaire, ce dernier commandant simultanément ledit amplificateur à gain réglable du deuxième trajet et un amplificateur à gain réglable disposé dans le premier trajet du côté de la borne d'entrée commune aux deux trajets et/ou un amplificateur à gain réglable disposé dans le premier trajet du côté de la borne de sortie commune aux deux trajets.

Dans d'autres modes de réalisation de l'invention, il est possible de faire l'économie d'un amplificateur à gain réglable, par le fait que le premier et le deuxième trajet comportent en commun un amplificateur à gain réglable disposé du côté de la borne d'entrée commune aux deux trajets et/ou un amplificateur à gain réglable disposé du côté de la borne de sortie commune aux deux trajets, l'un et/ou l'autre de ces amplificateurs à gain réglable communs aux deux trajets étant commandé(s) par ledit régulateur linéaire.

Il est avantageux que les oscillations non gênantes créées dans la boucle se refermant par le deuxième trajet, se produisent à une fréquence bien définie. On obtient ce résultat, de préférence au moyen d'un filtre à bande passante étroite qui est connecté dans la partie du deuxième trajet distincte du premier trajet, avant l'endroit où est prélevé le signal qui est appliqué à l'entrée du régulateur linéaire, de façon à augmenter sélectivement le gain dans le deuxième trajet.

En outre, pour respecter les conditions de gains relatifs des deux trajets, on peut connecter de plus dans la partie du premier trajet distincte du deuxième trajet un filtre augmentant le gain dans le même bande passante étroite que le filtre du deuxième trajet. On peut aussi connecter un tel filtre, avant la borne d'entrée commune aux deux trajets, après la borne de sortie commune aux deux trajets ou dans les parties communes aux deux trajets.

Le dispositif de l'invention peut avantageusement être utilisé dans un poste téléphonique à haut-parleur, le circuit de couplage du poste à la ligne téléphonique étant alors inclus dans la partie du premier trajet distincte du deuxième trajet. Dans la boucle appelée par la suite boucle auxiliaire et comprenant le trajet acoustique entre le haut-parleur et le microphone du poste et se refermant par le deuxième trajet, on obtient des oscillations entretenues d'amplitude contrôlée par le régulateur de façon à être non gênantes et en particulier inaudibles; en même temps, on empêche de se produire des oscillations de Larsen gênantes dans la boucle électro-acoustique appelée boucle principale, se refermant par le premier trajet, par suite d'imperfections du circuit de couplage du poste d'abonné local ou par suite d'un couplage acoustique dans le poste d'abonné distant.

Le dispositif de l'invention appliqué à un poste téléphonique à haut-parleur du type "mains libres" permet de plus d'effectuer de façon très simple une commutation automatique des gains dans les voies émission et réception du poste. On doit noter à cet égard que dans beaucoup de postes téléphoniques "mains libres" connus, par exemple celui décrit dans le brevet français n° 2 376 576, on utilise la commutation de gain par la parole pour éviter la naissance d'oscillations de Larsen gênantes. Dans les postes de ce genre les signaux de parole dans les voies émission et réception sont détectés pour déterminer la voie où le signal de parole est le plus élevé; une commande d'augmentation de gain est effectuée dans cette voie et une commande de diminution de gain est effectuée dans l'autre voie, ces deux variations de gain étant complémentaires pour que le gain total dans la boucle où les oscillations de Larsen peuvent se produire reste inférieur à un.

Dans un poste téléphonique "mains libres" muni du dispositif de l'invention, il n'est pas nécessaire d'effectuer une commutation de gains par la parole pour éviter les oscillations de Larsen gênantes, mais il peut être utilie, pour d'autres raisons, d'effectuer une commutation de gains manuelle ou commandée par la parole. Par exemple, lorsque le poste "mains libres" est utilisé dans un local très bruyant, on peut avoir intérêt à renforcer le gain de la chaîne réception, afin d'avoir une écoute plus confortable, et à diminuer le gain de la chaîne émission, quitte à parler plus fort ou plus près devant le microphone. Cette commutation de gains peut être mise en route manuellement ou directement commandée par la parole. Dans cette deuxième hypothèse, lorsqu'on ne parle pas devant le poste "mains libres", le gain de la chaîne réception doit être augmenté, ce qui rend l'écoute plus confortable, et le gain de la chaîne émission doit être diminué, ce qui évite au correspondant d'entrendre à niveau relativement fort le bruit ambiant du local dans lequel est placé le poste "mains libres". Par contre, dès que l'on parle devant le poste "mains libres", les gains des chaînes émission et réception doivent reprendre leurs valeurs nominales.

Le dispositif de la présente invention permet, de façon inattendue, la mise en oeuvre d'un moyen extrêmement simple pour effectuer ces commutations de gain dans les voies émission et réception d'un poste téléphonique.

Selon une première alternative, dans un poste téléphonique muni du dispositif de l'invention et comportant dans le premier trajet un amplificateur à gain réglable commandé par le régulateur linéaire et situé dans la voie réception, un autre amplificateur à gain réglable servant à la commutation de gain dans les deux voies est disposé sur la voie émission entre le microphone et la borne d'entrée commune aux parties distinctes du premier et du deuxième trajet, lesdits moyens prévus pour que le gain dans le deuxième trajet reste supérieur au gain dans le premier trajet étant ajustés de façon que la boucle électro-acoustique se refermant par le deuxième trajet soit en permanence le siège d'oscillations non gênantes de faible amplitude, une variation provoquée du gain dudit autre amplificateur à gain réglable déterminant une variation de gain en sens inverse dans la voie réception.

Selon une autre alternative si l'amplificateur à gain réglable situé sur le premier trajet et commandé par le régulateur linéaire est disposé sur la voie émission, l'amplificateur à gain réglable servant à la commutation de gain est disposé sur la voie réception entre le haut-parleur et la borne de sortie commune aux parties distinctes du premier et du deuxième trajet.

Dans les variantes du dispositif de l'invention qui utilisent un amplificateur à gain réglable, commandé par le régulateur linéaire et commun au premier et au deuxième trajet, on obtient des variations de gain exactement complémentaires dans la voie émission et dans la voie réception, en commandant une variation de gain seulement sur l'amplificateur servant à la commutation de gain et situé soit dans la voie émission, soit dans la voie réception.

Dans les deux alternatives du système de commutation de gain, on peut effectuer une commutation automatique des gains dans les deux voies en utilisant un détecteur du signal de parole du microphone, pour commander la variation du gain de l'amplificateur de commutation de gains.

La description suivante en regard des dessins annexés, le tout donné à tire d'exemple, fera bien comprendre comment l'invention peut être réalisée.

La figure 1 représente le dispositif de l'invention applique à un poste téléphonique à haut-parleur.

La figure 2 montre la caractéristique du régulateur utilisé dans le dispositif de l'invention.

La figure 3 représente des schémas 3*a* à 3*f* correspondant à des variantes du dispositif de l'invention.

La figure 4 représente le dispositif de l'invention appliqué à un système d'asservissement.

La figure 5 représente un mode de réalisation du régulateur et de deux amplificateurs à gain réglable, commandés par le régulateur.

La figure 6 représente le dispositif de la figure 1, muni de plus de moyens conformes à l'invention pour commuter les gains dans les deux voies d'un poste téléphonique.

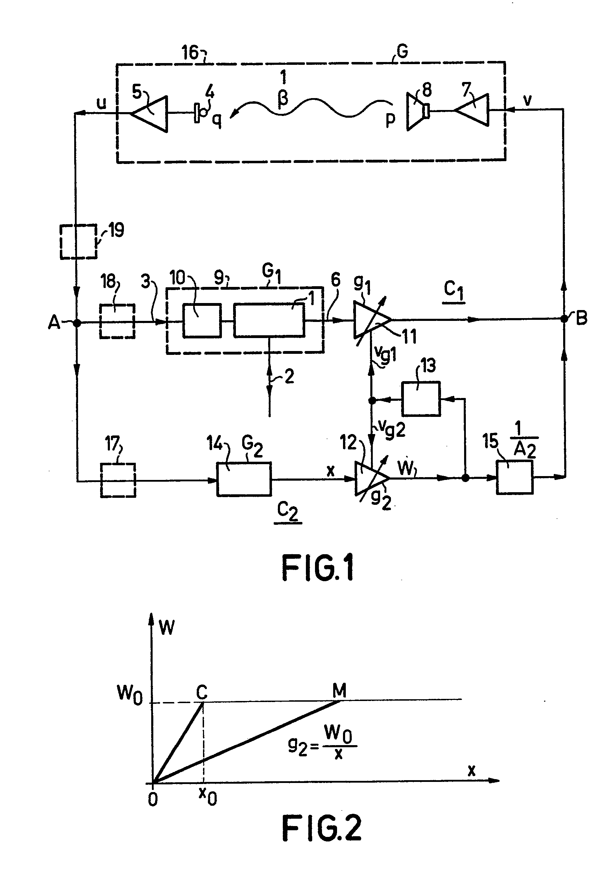

La figure 1 représente une boucle électro-acoustique créée par exemple par un poste téléphonique à haut-parleur. Ce poste comprend un circuit de couplage 1 qui couple la ligne téléphonique 2, d'une part à la voie émission 3 du poste munie du microphone 4 et d'un amplificateur 5 et d'autre part à la voie réception 6 du poste munie de l'amplificateur d'écoute 7 et du haut-parleur 8. Entre le haut-parleur 8 et le microphone 4 il existe un certain couplage acoustique qui dépend notamment de la distance entre ces transducteurs, de leur orientation et qui peut varier dans les postes téléphoniques dits "à écoute amplifiée" dont le microphone fixé sur le combiné, a une position indéterminée par rapport au haut-parleur. Ce couplage peut être caractérisé par un coefficient de couplage

$$\frac{1}{\beta} < 1,$$

$\beta$ étant l'atténuation de la puissance acoustique émise par le haut-parleur et atteignant le microphone.

Par ailleurs, par suite des imperfections inévitables du circuit du couplage 1, le signal apparaissant dans la voie émission 3 du poste n'est pas entièrement retransmis sur la ligne téléphonique 2 et une fraction de ce signal se retrouve sur la voie réception 6 du poste. Un autre couplage intempestif entre les voies émission et réception du poste local représenté sur la figure peut être également engendré par le chemin comprenant la ligne téléphonique 2 connectée à un poste à haut-parleur distant dans lequel existe aussi un couplage acoustique entre haut-parleur et microphone. Quelle que soit l'origine du couplage intempestif entre la voie émission 3 et la voie réception 6 du poste téléphonique, on peut définir un dispositif 9 inséré entre les voies émission et réception du poste, et ayant un gain $G_1$ défini comme le module du rapport entre le signal apparaissant sur la voie émission 3 et le signal en résultant apparaissant sur la voie réception 6 du poste. On ne change rien à la généralité de la définition de ce dispositif 9, si l'on y insère en série avec le circuit de couplage 1 un circuit 10, par exemple un amplificateur, le gain $G_1$ incluant alors le gain de ce circuit 10.

Le couplage acoustique entre le haut-parleur 8 et le microphone 4 et le couplage engendré intempestivement dans le dispositif 9 entre les voies émission 3 et réception 6 du poste déterminent une boucle électro-acoustique dans laquelle peuvent prendre naissance des oscillations si le gain de la boucle est égal ou supérieur à un. La fréquence de ces oscillations n'est pas parfaitement déterminée et se situe dans la bande passante des éléments inclus dans la boucle, soit environ 300—4000 Hz. L'amplitude de ces oscillations n'est limitée que par la saturation des éléments de la boucle.

Pour éviter ces oscillations de boucle intempestives, qui rendent pratiquement impossible l'usage du poste téléphonique, il est connu d'insérer un amplificateur 11 à gain réglable dans la voie réception 6 du poste et de commander ce gain $g_1$ à partir de signaux d'enveloppe des signaux des voies émission et réception. Ce procédé de commande de gain n'est pas efficace pour un couplage acoustique élevé et fait dépendre le gain $g_1$ des signaux utiles de parole.

L'invention procède d'une manière tout à fait différente, permettant d'éviter ces inconvénients. Conformément à l'invention, entre la borne d'entrée A et la borne de sortie B d'un premier trajet $C_1$ de la boucle, incluant le dispositif 9 et l'amplificateur 11 à gain réglable, est connecté un deuxième trajet $C_2$ qui, dans le mode de réalisation représenté à la figure 1 est entièrement distinct du premier trajet et inclut un autre amplificateur 12 à gain réglable. Le gain $g_2$ de l'amplificateur 12 est commandé par un régulateur linéaire 13 qui reçoit à son entrée le signal W prélevé dans le deuxième trajet à la sortie de l'amplificateur 12 et qui fournit un signal $V_{g2}$ de commande de gain de façon à maintenir constant le signal W au-delà d'une certaine valeur du signal d'entrée x de l'amplificateur 12.

La figure 2 représente la caractéristique du signal de sortie W en fonction du signal d'entrée x de l'amplificateur 12 commandé de cette manière. Jusqu'à une valeur $x_0$ du signal d'entrée x, pour laquelle le signal de sortie vaut $W_0$, le gain $g_2$ de l'amplificateur est constant et égal à une valeur maximale

$$g_{2M} = \frac{W_0}{x_0}$$

définie par la pente de la ligne OC. AU-delà de $x_0$, le niveau du signal de sortie W reste constant et égal à $W_0$. Pour une valeur quelconque x du signal d'entrée, le point de fonctionnement de l'amplificateur s'établit en M et le gain de l'amplificateur

$$g_2 = \frac{W_0}{x} \text{ diminue quand x augmente.}$$

Il est important de préciser qu'avec le régulateur linéaire 13 associé à l'amplificateur 12, ce dernier n'introduit aucune non linéarité dans le deuxième trajet.

L'amplificateur 11 du premier trajet $C_1$ est commandé par un signal de commande de gain $v_{g1}$ issu de régulateur 13 de façon qu'on gain $g_1$ soit asservi sur le gain $g_2$ de l'amplificateur 12 du deuxième trajet $C_2$. Le gain $g_2$ de l'amplificateur 11 peut être à chaque instant égal ou proportionnel au gain $g_2$ de l'amplificateur 12. Si les deux amplificateurs 11 et 12 sont construits de la même manière, les deux signaux de commande $v_{g1}$ et $v_{g2}$ peuvent être égaux et peuvent provenir de la même sortie du régulateur comme l'indique la figure. Enfin des moyens sont prévus dans l'un et/ou l'autre des deux trajets pour que le gain dans le deuxième trajet $C_2$ reste supérieur au gain dans le premier trajet $C_1$ dans toute la bande de fréquence où les oscillations sont susceptibles de se produire. Sur la figure 1, ces moyens sont représentés par l'amplificateur 14 de gain $G_2$, disposé sur le deuxième trajet $C_2$ avant l'amplificateur à gain variable 12 et associé de préférence à un atténuateur 15 de gain

$$\frac{1}{A_2},$$

connecté entre la sortie de l'amplificateur 12 et la borne de sortie B commune aux deux trajets. Avec les notations précisées ci-dessus, cette condition de gain dans les deux trajets s'écrit:

$$G_2 \cdot \frac{1}{A_2} \cdot g_2 > G_1 \cdot g_1 \qquad (1)$$

On doit bien noter ici que cette condition (1) doit être réalisée pour chacune des fréquences possibles d'oscillations de boucle, c'est-à-dire dans l'exemple choisi, pour chaque fréquence de la bande 300—4000 Hz.

Dans le cas où les deux amplificateurs 11 et 12 sont identiques et commandés par les même signaux, la condition (1) devient:

$$G_2 \cdot \frac{1}{A_2} > G_1$$

Pour expliquer le fonctionnement du système de l'invention et montrer qu'il permet d'éviter des oscillations de boucle gênantes, il est avantageux de définir le gain G d'un circuit électro-acoustique inclus dans le cadre 16 et comprenant le haut-parleur 8 et son amplificateur 7, le microphone 4 et son amplificateur 5, enfin le trajet acoustique entre haut-parleur et microphone, défini par le coefficient de couplage

$$\frac{1}{\beta} \cdot$$

Ce gain G peut se définir comme le module du rapport entre le signal v appliqué à l'amplificateur 7 et le signal u fourni par l'amplificateur 5. Pour exprimer ce gain G, on peut définir plusieurs grandeurs.

On appelle p la puissance acoustique juste à la sortie de haut-parleur et q la puissance acoustique juste devant le microphone. On a évidemment:

$$\frac{p}{q} = \frac{1}{\beta} \qquad (2)$$

Pour introduire le coefficient de transduction du haut-parleur, on peut définir une puissance acoustique nominale $p_0$ fournie par le haut-parleur 8 et qui serait engendrée par un signal $v_0$ à l'entrée de l'amplificateur 7. Le coefficient de transduction de l'ensemble constitué par l'amplificateur 7 et le haut-parleur 8 est

$$\left[\frac{p_0}{v_0}\right].$$

Dans le domaine où cet ensemble amplificateur — haut-parleur est linéaire, on peut écrire:

$$p = v\left[\frac{p_0}{v_0}\right] \qquad (3)$$

Pour introduire le coefficient de transduction de microphone, on peut définir une puissance acoustique $q_0$ parvenant juste devant le microphone et engendrée par un locuteur produisant une puissance acoustique $Kp_0$ (K étant un coefficient constant) et situé à une distance nominale caractérisée par un coefficient de couplage

$$\frac{1}{\beta_0}.$$

A cette puissance acoustique

$$q_0 = K\frac{p_0}{\beta_0}$$

correspond à la sortie de l'amplificateur 5 un signal $u_0$. Le coefficient de transduction de l'ensemble constitué par le microphone 4 et l'amplificateur 5 est

$$\left[\frac{u_0}{q_0}\right] = \left[\frac{u_0}{K\,p_0}\cdot\beta_0\right].$$

Dans le domaine où cet ensemble microphone-amplificateur est linéaire, on peut écrire:

$$u = q\left[\frac{u_0}{K\,p_0}\cdot\beta_0\right] \qquad (4)$$

En tenant compte des relations (2), (3) et (4) on peut mettre le gain G du circuit électro-acoustique 16, sous la forme:

$$G = \frac{u}{v} = \frac{\beta_0}{\beta}\cdot\frac{u_0}{v_0}\cdot\frac{1}{K} \qquad (5)$$

Puisque d'après la condition (1) à respecter, le gain dans le deuxième trajet $C_2$ entre A et B est supérieur au gain dans le premier trajet $C_1$, des oscillations ne peuvent s'établir que dans la boucle auxiliaire constituée par le circuit électro-acoustique 16 et le deuxième trajet $C_2$ et ne peuvent pas s'établir dans la boucle principale constituée par le circuit 16 et le premier trajet $C_1$. On suppose d'abord que dans la boucle auxiliaire, n'est présent aucun signal de parole, créé par le microphone 4 ou venant de la ligne téléphonique 2. On n'a pas d'oscillations si le gain dans cette boucle auxiliaire est inférieur à l'unité, c'est-à-dire si:

$$G\,.\,G_2\,.\,\frac{1}{A_2}\,.\,g_2 < 1 \qquad (6)$$

Dans cette inégalité, on doit donner au gain $g_2$ de l'amplificateur 12 sa valeur maximale $g_{2M}$ définie plus haut. Comme d'après la formule (5) le gain G est proportionnel au coefficient de couplage

$$\frac{1}{\beta}$$

entre haut-parleur et microphone, l'inégalité (6) confirme simplement que l'on n'a pas d'oscillations si ce coefficient de couplage est inférieur à une certaine valeur.

Si le coefficient de couplage entre haut-parleur et microphone augmente, le gain G augmente et au-delà d'une certaine valeur du coefficient de couplage, l'inégalité (6) n'est plus respectée. Il en résulte la naissance d'oscillations dans la boucle auxiliaire constituée par le circuit 16 et le deuxième trajet $C_2$. Le régulateur linéaire 13 commande une diminution de gain $g_2$ de l'amplificateur 12 de façon que l'amplitude de ces oscillations à la sortie de cet amplificateur reste limitée à la valeur $W_0$. Le signal de sortie

$$\frac{W_0}{A_2}$$

du circuit atténuateur 15 a alors une valeur suffisamment faible pour que tous les éléments de la boucle, notamment les amplificateurs 5 et 7 du circuit 16, travaillent en régime linéaire. Pour ce régime d'oscillations le gain total de la boucle auxiliaire s'établit à la valeur 1, c'est-à-dire que l'on peut écrire:

$$G\,.\,G_2\,.\,\frac{1}{A_2}\,.\,g_2 = 1 \qquad (7)$$

Puisque les éléments du circuit 16 travaillent en régime linéaire, la formule (5) donnant le gain G est utilisable et en combinant les formules (5) et (7) on obtient aisément:

$$g_2 = \frac{\beta}{\beta_0}\left[\frac{A_2}{G_2}\cdot\frac{v_0}{u_0}\cdot K\right] \qquad (8)$$

Cette formule (8) montre qu'en régime d'oscillations dans la boucle auxiliaire formée par le circuit 16 et le deuxième trajet $C_2$, le gain $g_2$ de l'amplificateur 12 s'établit à une valeur proportionnelle au coefficient d'atténuation acoustique $\beta$ entre haut-parleur et microphone, qui est pratiquement lui-même proportionnel à la distance entre ces deux transducteurs.

Le gain $g_1$ de l'amplificateur 11 du premier trajet, asservi sur le gain $g_2$, s'établit donc aussi automatiquement sur une valeur proportionnelle au coefficient d'atténuation acoustique $\beta$, c'est-à-dire pratiquement proportionnelle à la distance entre haut-parleur et microphone. Ce gain $g_1$ varie dans le même sens que le gain $g_2$, ce qui permet de respecter en toutes circon- stantes la condition (1). Cette condition (1) étant respectée, le gain total dans la boucle principale formée par le circuit 16 refermée sur le premier trajet $C_1$ reste toujours inférieur à 1, de sorte que ce premier trajet $C_1$ ne contribue pas à produire des oscillations de Larsen de forte amplitude et gênantes aux bornes du circuit électro-acoustique 16.

Ains, avec le dispositif de l'invention, on obtient que, lorsque le coefficient d'atténuation acoustique devient suffisamment faible pour créer les conditions d'oscillations de boucle, ces oscillations ne peuvent s'établir qu'à travers le deuxième trajet $C_2$, grâce notamment à l'asservissement du gain $g_1$ de l'amplificateur 11 du premier trajet $C_1$ sur le gain $g_2$ de l'amplificateur 12 du deuxième trajet. Dans le deuxième trajet les oscillations de boucle sont contrôlées pour ne pas être gênantes dans le circuit électro-acoustique 16, c'est-à-dire pour être inaudibles et pour ne pas saturer les amplificateurs 7 et 5; ainsi, pour une amplitude maximale donnée $W_0$ des oscillations à la sortie de l'amplificateur 12, on peut toujours augmenter le coefficient d'atténuation $A_2$ du circuit 15 pour que l'amplitude des oscillations à l'entrée du circuit 16 soit extrêmement faible et non gênante, le gain $G_2$ du circuit 14 étant augmenté de façon correspondante pour que la condition (1) soit respectée. Le signal procuré sur la borne de sortie B par les oscillations circulant dans le deuxième trajet $C_2$ a la valeur fixe

$$v_L = \frac{W_0}{A_2}.$$

On se place maintenant dans le cas où le premier trajet $C_1$ et le circuit électro-acoustique 16 sont le siège de signaux utiles de parole. On suppose d'abord que le signal de parole produit par le microphone 4 se trouve, à partir du point A, entièrement dirigé vers le premier trajet $C_1$. Des oscillations de boucle peuvent alors prendre naissance par le deuxième trajet $C_2$ exactement comme on l'a expliqué, sans être influencées par ce signal de parole issu du microphone. Au point B, ces oscillations de boucle ont une très faible amplitude et se superposent au signal de parole provenant de la ligne téléphonique 2 via la sortie du premier trajet $C_1$. Un auditeur placé devant le haut-parleur 8 ne percevra pas ces oscillations de boucle de très faible amplitude. Dans l'hypothèse faite ci-dessus, le gain $g_2$ de l'amplificateur 12 et donc le gain $g_1$ de l'amplificateur 11 du premier trajet ne sont pas influencés par le signal de parole issu du microphone 4 et ne dépendent que du coefficient de couplage acoustique $\beta$.

En fait, si aucune précaution n'est prise, une fraction du signal issu du microphone 4 risque d'être appliquée au deuxième trajet $C_2$ et de perturber la régulation de l'amplitude des oscillations de boucle par le régulateur 13. Dans ce cas, le gain $g_2$ de l'amplificateur 12 et donc le gain $g_1$ de l'amplificateur 11 dépendront non seulement du coefficient de couplage acoustique, mais également de l'amplitude du signal de parole issu du microphone 4. Un moyen pour éviter cet inconvénient consiste à disposer sur le deuxième trajet $C_2$, avant l'amplificateur 12, un filtre 17 représenté en traits pointillés sur la figure. Le gain $G_2$ dans le deuxième trajet inclut alors les gains de l'amplificateur 14 et du filtre 17.

Si, dans le premier trajet $C_1$, le gain pour les fréquences supérieures à 3000 Hz par exemple est supérieur au gain pour les fréquences inférieures à 3000 Hz, on peut utiliser comme filtre 17, un filtre passe-haut, augmentant le gain dans le deuxième trajet pour les fréquences supérieures à 3000 Hz. La condition (1) est alors facilement respectée et l'on obtient une moindre influence des signaux de parole sur le processus de régulation des oscillations de boucle. Ces oscillations de boucle se produisent à une fréquence supérieure à 3000 Hz, mais toutefois encore mal définie, ce qui est un inconvénient.

Il est plus avantageux que le filtre 17 soit un filtre à bande passante très étroite. Ce filtre augmente sélectivement le gain $G_2$ dans sa bande passante et établit un déphasage convenable de sorte que le gain dans la boucle auxiliaire formée par le circuit 16 et le deuxième trajet $C_2$ puisse prendre une valeur positive dans ladite bande passante et que les oscillations dans cette boucle auxiliaire s'établissent pratiquement à la fréquence centrale de cette bande passante, quel que soit le couplage acoustique entre haut-parleur et microphone; en même temps les signaux de parole dans le deuxième trajet ont un niveau très faible vis à vis des oscillations de boucle et ne perturbent pratiquement pas la régulation de l'amplitude de ces oscillations.

On peut remarquer ici qu'avec un filtre 17 à bande passante étroite, la condition (1) qui permet d'assurer que des oscillations de boucle ne se referment que par le deuxième trajet $C_2$, devient plus facile à respecter. Il suffit pour respecter cette condition que le gain du deuxième trajet pour la fréquence centrale de la bande étroite du filtre 17 soit supérieur au gain que présente le premier trajet pour toutes les fréquences de la bande de ce premier trajet (par exemple 300—4000 Hz). Cette condition (1) devient encore plus simple à réaliser si l'on dispose aussi dans le premier trajet un filtre 18 représenté par des traits pointillés, augmentant le gain dans la même bande passante étroite que le filtre 17. Le gain $G_1$ dans le premier trajet inclut alors les gains du dispositif 9 et du filtre 18. Ce filtre 18 augmente sélectivement le gain $G_1$ dans sa bande passante, de sorte que le gain du premier trajet $C_1$ présente une valeur maximale dans cette bande passante étroite du filtre 18. Il suffit alors pour respecter la condition (1), et donc pour que les oscillations de boucle ne se referment que par le deuxième trajet $C_2$, que le gain du deuxième trajet $C_2$ soit supérieur au gain du premier trajet $C_1$ pour la fréquence centrale commune aux bandes passantes des filtres 17 et 18. On notera ici que le filtre 18 n'apporte pratiquement aucune perturbation sur les signaux de parole, du fait de sa bande étroite. Il est clair que l'amplificateur 14 et la filtre 17 d'une part, et l'amplificateur 10 et le filtre 18 d'autre part peuvent être réalisés sous la forme de deux amplificateurs sélectifs. Enfin, au lieu d'utiliser un filtre 18 dans le premier trajet $C_1$, on pourrait utiliser un filtre 19 représenté en traints pointillés et disposé sur le trajet entre la sortie de l'amplificateur 5 et la borne d'entrée A commune aux deux trajets. Ce filtre 19 augmentant le gain dans la même bande passante étroite que le filtre 17, la condition (1) est alors forcément automatiquement respectée et les oscillations de boucle à la fréquence centrale des deux filtres 17 et 19 se referment par le deuxième trajet. On peut enfin remarquer que dans la variante décrite plus haut, où le filtre 17 du deuxième trajet est un filtre passe-haut, augmentant le gain $G_2$ pour les fréquences supérieures à 3000 Hz par exemple, on pourrait aussi utiliser en filtre 18 ou un filtre 19 passe-haut, mais ayant une différence d'atténuation faible entre la bande haute transmise et la bande basse atténuée, afin de ne pas déformer sensiblement les signaux de parole.

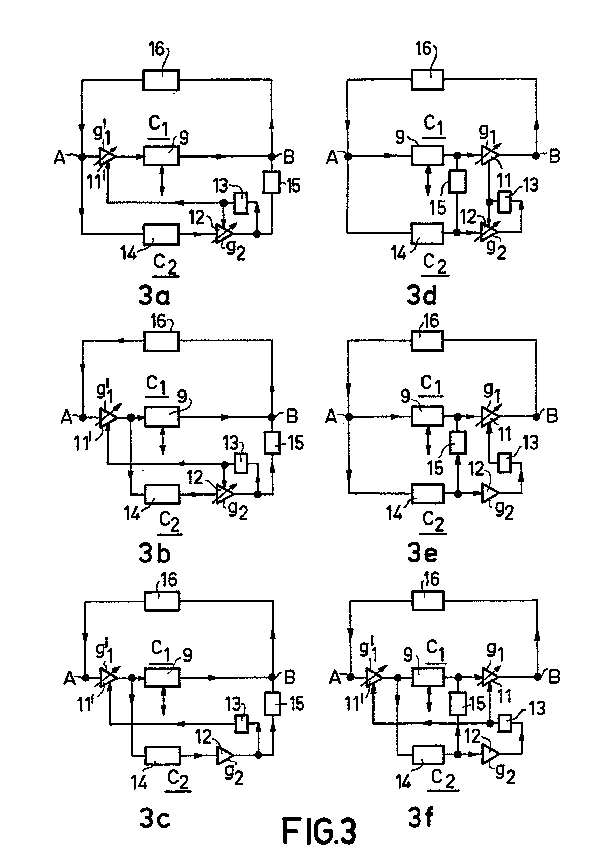

Le dispositif de l'invention peut être réalisé suivant différentes variantes que l'on va maintenant décrire à l'aide de la figure 3 qui représente des schémas correspondant à quelques-unes des variantes possibles. Sur ces schémas, on utilise avec les mêmes références les éléments du schéma de la figure 1 qui sont essentiels et suffisants pour la compréhension, à savoir le circuit électro-acoustique 16 de gain G, le dispositif 9 de gain $G_1$ disposé sur le premier trajet $C_1$, le dispositif 14 de gain $G_2$ et le circuit atténuateur 15 de gain

$$\frac{1}{A_2}$$

disposés sur le deuxième trajet $C_2$ et enfin le régulateur linéaire 13. On peut utiliser également les amplificateurs 11 et 12 de gain $g_1$ et $g_2$, comme on le précisera par la suite. Pour simplifier, on a omis les filtres 17, 18, 19 représentés en traits pointillés sur la figure 1.

Dans le dispositif de la figure 3a, les deux trajets $C_1$ et $C_2$ connectés entre les bornes A et B sont entièrement distincts, comme dans le dispositif représenté à la figure 1. La différence du dispositif de la figure 3a avec celui de la figure 1 réside dans le fait que l'amplificateur à gain variable du premier trajet est disposé entre la borne d'entrée A commune aux deux trajets et le dispositif 9, au lieu d'être disposé entre le dispositif 9 et la borne de sortie B commune aux deux trajets. A sa nouvelle place, cet amplificateur à gain variable du premier trajet porte la référence 11' et a un gain $g'_1$. Il est commandé exactement de la même manière que l'amplificateur 11 de la figure. En ce qui concerne le contrôle des oscillations de Larsen, tout ce qui a été expliqué pour le dispositif de la figure 1 est entièrement valable pour le dispositif de la figure 3a. En particulier les oscillations de Larsen sont limitées à une amplitude faible et non gênante ayant sur la borne B la valeur fixe

$$v_L = \frac{W_0}{A_2},$$

$W_0$ étant, comme on l'a expliqué à l'aide de la figure 2, la valeur maximale fixe du signal W fourni par l'amplificateur variable 12 à l'entrée du régulateur linéaire 13.

Dans une autre variante non représentée, on peut combiner les dispositifs des figures 1 et 3a, en utilisant deux amplificateurs à gain variable 11 et 11' disposés sur le premier trajet de part et d'autre du dispositif 9 et commandés tous deux par le signal élaboré par le régulateur 13.

Dans le dispositif de la figure 3b, les deux trajets $C_1$ et $C_2$ connectés entre les bornes A et B ne sont pas entièrement distincts. Le schéma de la figure 3b se distingue de celui de la figure 3a par le fait que l'entrée du dispositif 14 du deuxième trajet est connectée non pas à la borne A, mais à la sortie de l'amplificateur à gain variable 11'. En considérant toujours la borne A, comme la borne d'entrée commune aux deux trajets $C_1$ et $C_2$, l'amplificateur 11' devient commun à ces deux trajets, tandis qu'après la sortie de l'amplificateur 11' jusqu'à la borne B, les deux trajets ont des parties distinctes. Si l'on s'arrange pour que dans leurs parties distinctes, le deuxième trajet ait un gain supérieur à celui du premier trajet, on obtient dans ce dispositif 3b que les oscillations de Larsen ne se produisent qu'à travers la partie du deuxième trajet distincte du premier trajet et que l'amplitude de ces oscillations est faible et non gênante, étant limitée sur la borne B à la valeur fixe

$$v_L = \frac{W_0}{A_2}.$$

Dans une variante non représentée du dispositif de la figure 3b, le régulateur linéaire 13 peut commander, outre les amplificateurs à gain variable 12 et 11', un amplificateur à gain variable non représenté disposé entre la sortie du dispositif 9 et la borne B.

Le dispositif de la figure 3c peut être considéré comme un perfectionnement de celui de la figure 3b car il permet de faire l'économie d'un amplificateur à gain variable. Il en diffère par le fait que l'amplificateur 12 du deuxième trajet n'est plus commandé par le régulateur 13, et a ainsi un gain $g_2$ fixe. Dans le dispositif de la figure 3c, en considérant que l'amplificateur 11' de gain $g'_1$ fait aussi bien partie du premier que du deuxième trajet entre les bornes A et B, on peut dire que le régulateur 13 agit sur le gain $g'_1$ de l'amplificateur 11' pour maintenir constant et égal à $W_0$, le signal W prélevé dans le deuxième trajet à la sortie de la chaîne d'amplification 11', 14, 12 pour être appliqué à l'entrée du régulateur 13. L'amplitude des oscillations sur la borne B est encore limitée à une valeur faible et fixe

$$\frac{W_0}{A_2}.$$

Dans une variante non représentée du dispositif de la figure 3c, le régulateur 13 peut commander en outre un amplificateur à gain variable disposé entre la sortie du dispositif 9 et la borne B.

Dans le dispositif de la figure 3d, les deux trajets $C_1$ et $C_2$ connectés entre les deux bornes A et B ne sont pas non plus entièrement distincts. En comparant le dispositif de la figure 3d à celui de la figure 1, on peut voir qu'il en diffère par le fait que le circuit atténuateur 15 de gain

$$\frac{1}{A_2}$$

se trouve connecté entre le sortie du dispositif 14 et l'entrée de l'amplificateur à gain variable 11. En considérant toujours la borne B, comme la borne de sortie commune aux deux trajets $C_1$ et $C_2$, l'amplificateur 11 est commun à ces deux trajets. Entre la borne A et l'entrée de l'amplificateur 11 sont connectées les parties distinctes des deux trajets, comprenant le dispositif 9 pour le premier trajet $C_1$ et le montage en cascade du dispositif 14 et du circuit atténuateur 15 pour le deuxième trajet $C_2$. Il est à noter que dans ce dispositif de la figure 3d, l'amplificateur 12 n'est pas inclus dans le deuxième trajet. Un signal est prélevé dans la partie du deuxième trajet distincte du premier trajet, en un endroit situé entre le dispositif 14 et le circuit atténuateur 15 et ce signal prélevé est appliqué par l'intermédiaire de l'amplificateur 12 à gain variable à l'entrée du régulateur 13. Ce dernier commande le gain $g_2$ de l'amplificateur 12 et le gain $g_1$ de l'amplificateur 11 de manière à maintenir à une valeur constante $W_0$ le signal W sortant de l'amplificateur 12 pour être appliqué à l'entrée du régulateur 13. Il est aisé de vérifier que les oscillations de Larsen ont sur la borne B une amplitude limitée à la valeur

$$v_L = \frac{W_0}{A_2}\frac{g_1}{g_2}.$$

qui est fixe puisque les gains $g_1$ et $g_2$ des amplificateurs 11 et 12 sont commandés par le même signal. En particulier, si ces amplificateurs sont identiques, on a $g_1 = g_2$ et la valeur limite de l'amplitude des oscillations de Larsen est

$$v_L = \frac{W_0}{A_2}.$$

Dans une variante non représentée du dispositif de la figure 3d, le régulateur 13 peut commander en outre un amplificateur à gain variable qui serait disposé entre la borne A et l'entrée du dispositif 9.

Le dispositif de la figure 3e constitue un perfectionnement du dispositif de la figure 3d, perfectionnement comparable à celui que constitue le dispositif 3c vis à vis du dispositif de la figure 3b. Le dispositif 3e diffère du dispositif 3d par le fait que le gain $g_2$ de l'amplificateur 12 n'est plus commandé par le régulateur 13 et reste donc fixe. Le régulateur 13 agit sur le gain $g_1$ de l'amplificateur 11 considéré comme faisant partie du deuxième trajet, de façon que le signal prélevé dans le deuxième trajet entre le dispositif 14 et le circuit atténuateur 15, puis amplifié dans l'amplificateur 12 de gain $g_2$ fixe, soit appliqué à l'entrée du régulateur avec une amplitude fixe $W_0$. Dans ce dispositif de la figure 3e, l'amplitude des oscillations de Larsen sur la borne B a la valeur

$$v_L = \frac{W_0}{A_2}\frac{g_1}{g_2}.$$

Mais contrairement aux variantes déjà décrites, cette valeur $v_L$ est variable, puisque le gain $g_1$ est variable et le gain $g_2$ fixe. Néanmoins, on peut toujours choisir un coefficient d'atténuation $A_2$ et un gain $g_2$ tels que l'amplitude variable des oscillations de Larsen reste faible et non gênante. Puisque l'amplificateur 11 de gain variable $g_1$ se trouve sur le trajet des signaux utiles de parole provenant de la ligne téléphonique pour être appliqués au haut-parleur inclus dans le dispositif électro-acoustique 16, on peut dire que la variante de la figure 3e permet d'obtenir sur la borne B un rapport constant entre le signal utile de parole et le bruit procuré par les oscillations de Larsen non gênantes engendrées au moyen du deuxième trajet. Dans une variante non représentée du dispositif de la figure 3e, le régulateur 13 pourrait commander en outre un amplificateur à gain variable disposé entre le borne A et le dispositif 9.

Le dispositif de la figure 3f se distingue de celui de la figure 3e par le fait qu'un amplificateur 11' à gain $g'_1$ variable commandé par le régulateur 13 est disposé entre la borne A et le dispositif 9 et en outre par le fait que l'entrée du dispositif 14 est connectée entre l'amplificateur 11' et le dispositif 9. Ainsi, dans ce dispositif de la figure 3f, les amplificateurs à gain variable 11' et 11 connectés respectivement à la borne A et à la borne B sont communs aux deux trajets $C_1$ et $C_2$ et sont commandés par le même signal fourni par le régulateur 13. Les parties distinctes des deux trajets comportent les mêmes éléments que dans le dispositif de la figure 3e et le régulateur 13 a son entrée connectée de la même manière sur le deuxième trajet, par l'intermédiaire de l'amplificateur 12 de gain fixe $g_2$. Comme dans le dispositif de la figure 3f, l'amplitude des oscillations de Larsen sur la borne B a la valeur

$$v_L = \frac{W_0}{A_2} \frac{g_1}{g_2},$$

variant comme $g_1$.

On peut remarquer que dans les dispositifs des figures 3c, 3e et 3f où l'on a préconisé un amplificateur 12 à gain $g_2$ fixe, on peut à la limite supprimer cet amplificateur, si un gain $g_2$ égal à l'unité convient pour le fonctionnement correct de ces dispositifs.

Dans les dispositifs des figures 3a à 3f il est avantageux de disposer des filtres ayant les mêmes caractéristiques et les mêmes fonctions que les filtres 17, 18 et 19 sur le dispositif de la figure 1. Un filtre ayant la fonction du filtre 17 serait disposé sur la partie du deuxième trajet distincte du premier trajet. Un filtre ayant la fonction du filtre 18 serait disposé sur la partie du premier trajet distincte du deuxième trajet. Un filtre ayant la fonction du filtre 19 serait disposé dans les parties communes à la boucle principale et à la boucle auxiliaire.

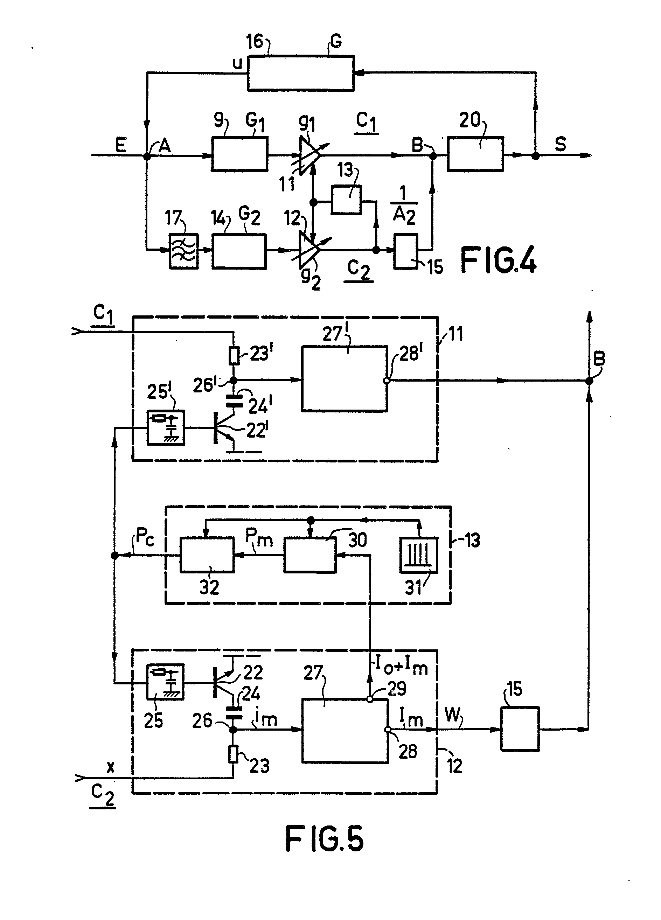

On a décrit ci-dessus l'invention appliquée à un système électro-acoustique bouclé intempestivement par couplage acoustique et/ou électrique. Mais l'invention s'applique d'une manière plus générale à tout système où peut s'établir une boucle dans laquelle peuvent prendre naissance des oscillations non contrôlées, d'amplitude élevée. L'invention peut s'appliquer ainsi à tous les systèmes d'asservissement, comme le montre la figure 4.

Sur la figure 4, on a représenté le schéma général bien connu d'un système d'asservissement destiné à asservir une grandeur de sortie S quelconque à un signal électrique d'entrée E. Pour faciliter la compréhension, on a utilisé les mêmes références et les mêmes notations que sur la figure 1 pour désigner des éléments et des grandeurs analogues. Le signal d'entrée E est appliqué via la borne A à la chaîne d'action du système d'asservissement comprenant en cascade le dispositif 9 de gain $G_1$, l'amplificateur à gain réglable 11 et enfin le dispositif 20 fournissant la grandeur de sortie S. La chaîne de réaction du système d'asservissement est connectée entre la sortie du dispositif 20 et la borne A. Cette chaîne de réaction est représentée par le dispositif 16 ayant une fonction de transfert de module G. En réponse à la grandeur de sortie S, le dispositif 16 fournit un signal électrique u qui est ajouté avec une phase convenable au signal d'entrée E. Lors de la mise au point de ce système d'asservissement ou lors de circonstances anormales pendant son fonctionnement, il peut arriver que des oscillations intempestives prennent naissance dans la boucle constituée par les chaînes d'action et de réaction et que la grandeur de sortie S atteigne des amplitudes élevées, non contrôlées et dangereuses.

L'invention permet d'éviter de telles oscillations de boucle. En utilisant par exemple le mode de réalisation de la figure 1, l'invention est mise en oeuvre, par le fait de connecter aux bornes A et B d'un premier trajet $C_1$ de la boucle d'asservissement, comportant les éléments 9 et 11, un deuxième trajet $C_2$ comportant par exemple selon l'une des variantes de la figure 1, un filtre 17 à bande passante étroite et un amplificateur 14 ayant ensemble un gain $G_2$, un amplificateur 12 à gain $g_2$ réglable et un atténuateur 15 de gain

$$\frac{1}{A_2}.$$

Le régulateur linéaire 13 régule le signal de sortie de l'amplificateur 12 et permet l'asservissement du gain $g_1$ de l'amplificateur 11 sur le gain $g_2$ de l'amplificateur 12. Tout ce qui a été expliqué pour le système électro-acoustique de la figure 1 reste valable. En particulier, les oscillations de boucle qui peuvent prendre naissance se referment par le deuxième trajet $C_2$ et dans ce deuxième trajet leur amplitude est contrôlée par le régulateur 13. Grâce au circuit atténuateur 15, l'amplitude de ces oscillations peut être amenée à une valeur très faible et non gênante au niveau du signal de sortie S du système d'asservissement.

Un mode de réalisation de l'ensemble constitué sur la figure 1 par l'amplificateur 12 à gain réglable et son régulateur 13, et par l'amplificateur 11 à gain réglable est représenté sur la figure 5. Ce mode de réalisation utilise le principe du dispositif de régulation décrit en détail dans la demande de brevet français publiée au nom de la demanderesse le 2 octobre 1981 sous le numéro 2 479 621.

Selon la figure 5, l'amplificateur 12 inséré dans le deuxième trajet $C_2$ comporte un transistor npn 22 dont l'émetteur est relié à une borne négative d'alimentation servant de référence, dont le collecteur reçoit le signal d'entrée x de l'amplificateur à travers le montage en série de la résistance 23 et du condensateur 24 et dont enfin la base est reliée à la sortie d'un circuit intégrateur 25. Ce circuit intégrateur 25 reçoit le signal impulsionnel $P_c$ formé dans le régulateur 13 comme on l'expliquera par la suite. Le transistor 22 est l'élément réglable de l'amplificateur 12. En effet, sur la borne 26 entre la résistance 23 et le condensateur 24, on obtient une tension qui est une fraction variable du signal d'entrée x de l'amplificateur, car son niveau dépend de l'état plus ou moins conducteur de l'espace émetter-collecteur du transistor 22 et donc de la tension de sortie du circuit intégrateur 25. Il est facile de voir qu'à une augmentation de la tension de sortie du circuit intégrateur 25 correspond sur la borne 26 une diminution du niveau du signal disponible sur la borne 26 et inversement. Ce signal à niveau variable disponible sur la borne 26 est par exemple un courant $i_m$ qui est appliqué à un circuit d'amplification 27 à gain fixe. Sur la sortie 28 le circuit 27 fournit un courant variable $I_m$ qui s'identifie au signal de sortie W de l'amplificateur à gain variable 12. Sur sa sortie 29 le circuit 27 fournit un courant $I_o+I_m$, $I_o$ étant un courant continu d'amplitude constante. Le courant $I_o+I_m$ est appliqué dans le régulateur 13 à un modulateur de largeur d'impulsions 30. Ce dernier reçoit par ailleurs des impulsions d'horloge du générateur d'horloge 31 et fournit un signal $P_m$ formé d'impulsions modulées en largeur par le courant $I_o+I_m$. Les techniques de formation d'impulsions modulées en largeur sont bien connues. Il est utile de préciser ici que les impulsions d'horloge servent notamment à échantillonner le courant d'entrée du modulateur, $I_o+I_m$. Quand, aux instants d'échantillonnage, la partie variable $I_m$ de ce courant est nulle, les impulsions du signal $P_m$ ont une largeur $P_o$. Selon qu'à ces instants d'échantillonnage le courant variable $I_m$ est positif ou négatif, les impulsions du signal $P_m$ ont une largeur plus grande ou plus petite que $P_o$. A un certain niveau du courant variable $I_m$ pour lequel ce courant peut prendre les valeurs $I_{m1}$ et $-I_{m1}$, correspondent respectivement des impulsions de largeur $P_o+P_{m1}$ et $P_o-P_{m1}$. Le signal modulé $P_m$ est appliqué à un circuit détecteur de dépassement 32 qui fournit un signal impulsionnel $P_c$ formé d'impulsions dites de compression, de durée fixe, se produisant chaque fois que les impulsions du signal $P_m$ atteignent les largeurs $P_o \pm P_{m1}$ correspondant à un certain niveau du courant $I_m$. Le signal impulsionnel $P_c$ est appliqué au circuit intégrateur 25 qui est chargé de fournir une tension représentative de la densité des impulsions de compression. Ce circuit intégrateur comporte dans son principe un condensateur qui est chargé par un courant constant pendant la durée des impulsions de compression et déchargé par un courant plus faible que le courant de charge. De cette manière quand apparaissent des impulsions de compression indiquant un dépassement de niveau du courant $I_m$, la tension fournie par le circuit intégrateur 25 augmente, ce qui rend le transistor 22 plus conducteur et produit un affaiblissement du niveau du courant $I_m$. Finalement la tension fournie par le circuit intégrateur 25 se stabilise autour d'une valeur moyenne déterminant un niveau constant du courant $I_m$. L'amplificateur 12 associé au régulateur 3, selon le mode de réalisation que l'on vient de décrire, a exactement la caractéristique requise représentée sur la figure 2, le niveau constant $W_0$ indiqué sur cette figure s'identifiant au niveau constant sur lequel s'établit le courant $I_m$.

L'amplificateur 11 à gain réglable inséré sur le premier trajet $C_1$ est réalisé comme l'amplificateur 12; il comporte les mêmes éléments ayant les mêmes références munies toutefois d'un accent. Cet amplificateur 11 est commandé par le signal impulsionnel $P_c$ élaboré dans le régulateur 13 comme on l'a expliqué. Le transistor 22' qui est l'élément réglable de l'amplificateur 11, est commande par le même signal que le transistor 22 qui est l'élément réglable de l'amplificateur 12. Si les éléments des deux amplificateurs, notamment les transistors 22 et 22', sont convenablement appairés, le gain de l'amplificateur 11 se trouve automatiquement réglé à chaque instant à la même valeur que le gain de l'amplificateur 12.

Puisque l'amplificateur 11 est destiné à traiter le signal utile (signal de parole par exemple), et l'amplificateur 12 les signal d'oscillation de boucle, il peut être utile de donner aux circuits intégrateurs 25 et 25' des constantes de temps différentes, appropriées aux signaux traités par ces amplificateurs. D'autre part, en conservant des transistors 22 et 22' apparés commandés par le même signal, il peut être avantageux de donner aux amplificateurs fixes 27 et 27' des gains différents, les gains des amplificateurs 11 et 12 restant dans un rapport constant. Enfin il est clair qu'un seul circuit intégrateur pourraît remplir la fonction de deux circuits intégrateurs 25 et 25' ayant la même constante de temps.

Le schéma de la figure 5 convient pour réaliser l'ensemble des amplificateurs 11 et 12 et du régulateur 13 sur le dispositif de la figure 1. Mais il est clair que, avec le même mode de réalisation, le régulateur 13 peut commander deux amplificateurs à gain variable et connectés d'une autre manière ou un seul de ces amplificateurs pour réaliser les différentes variantes représentées à la figure 3.

La présente invention appliquée à un poste téléphonique "mains libres" pour éviter des oscillations de Larsen gênantes permet de réaliser également, de façon très simple, une autre fonction très utile, à savoir la réalisation de variations de gain complémentaires dans les voies émission et réception du poste.

Dans les postes téléphoniques connus, pour obtenir des variations de gain complémentaires dans ces deux voies, il est nécessaire d'effectuer à l'aide d'un amplificateur de la voie émission, une variation de gain dans un sens et d'effectuer en même temps à l'aide d'un amplificateur de la voie réception une variation de gain de même amplitude, mais dans l'autre sens. Pour effectuer une commutation de ces gains par la parole, on utilise souvent deux détecteurs de parole dont les signaux de sortie sont utilisés pour la commutation de gain.

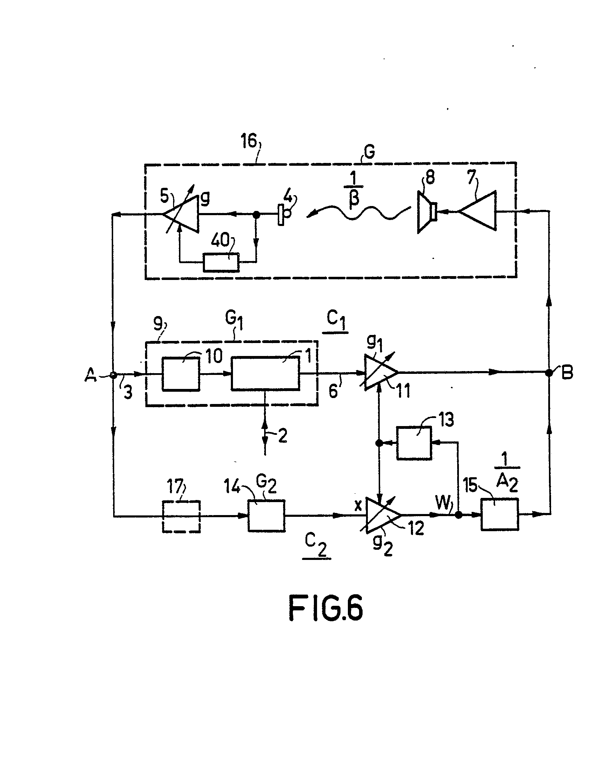

La présente invention permet d'obtenir des variations de gain rigoureusement complémentaires dans les deux voies du poste, en ne commandant le gain que d'un seul amplificateur. Pour décrire cette possibilité offerte par l'invention, on va se placer par exemple dans le cas d'un poste téléphonique associé au dispositif de l'invention conforme à la figure 1 et l'on va expliquer comment on peut effectuer la commutation de gains, à l'aide de la figure 6 qui reproduit avec les mêmes références la plupart des éléments représentés sur la figure 1. Dans ce mode de réalisation, l'amplificateur unique servant à commander le gain dans les deux voies du poste est l'amplificateur 5 que l'on suppose maintenant à gain variable et qui est situé dans la voie émission entre le microphone 4 et l'entrée A commune au premier trajet $C_1$ et au deuxième trajet $C_2$. Si, pour la valeur minimale du gain de l'amplificateur 5, c'est-à-dire la valeur minimale du gain G, on règle, comme on l'a déjà expliqué, le gain des éléments du deuxième trajet $C_2$ de façon que des oscillations entretenues non gênantes se produisent seulement dans la boucle auxiliaire constituée par le circuit 16 et le deuxième trajet, on est certain que ces oscillations non gênantes se produisent aussi pour toutes les autres valeurs du gain g de l'amplificateur 5. Pour toutes les valeurs du gain g, le gain total dans la boucle auxiliaire reste égal à 1, ce qui est exprimé par la formule (7) ci-dessus.

Comme les oscillations traversant le circuit 16 ont une amplitude très faible, les éléments de ce circuit travaillent en régime linéaire et le gain G du circuit 16 est pratiquement proportionnel au gain g. En posant G=hg, h étant un coefficient fixe, la formule (3) peut donc s'écrire:

$$h \cdot g \cdot g_2 \cdot G_2 \frac{1}{A_2} = 1 \qquad (9)$$

Dans le cas où les deux amplificateurs 11 et 12, à gains réglables $g_1$ et $g_2$ sont identiques et commandés par le même signal, on a $g_1 = g_2$ et la formule (9) peut s'écrire:

$$h \cdot g \cdot g_1 \cdot G_2 \frac{1}{A_2} = 1 \qquad (10)$$

On en déduit qu'à toute variation provoquée du gain g de l'amplificateur 5 amplifiant le signal du microphone 4, correspond automatiquement une variation de même amplitude et de sens contraire du gain $g_1$ de l'amplificateur 11 amplifiant le signal reçu dans le poste.

Dans le cas où l'asservissement des gains $g_1$ et $g_2$ est tel que $g_1 = a \, g_2$, il est facile de voir qu'à toute variation du gain g de l'amplificateur 5, correspond dans la voie réception une variation de gain de sens contraire et d'amplitude divisée par a.

On doit remarquer que pour obtenir des variations de gain de sens contraire dans les voies émission et réception on doit agir sur un amplificateur, tel que l'amplificateur 5, situé sur la voie émission entre le microphone 4 et la borne d'entrée A commune aux deux trajets $C_1$ et $C_2$. Une variation provoquée du gain en un endroit quelconque de la voie réception, par exemple une variation de gain de l'amplificateur 7, ne produirait aucune variation de gain dans la voie émission.

La variation du gain de l'amplificateur 5 peut être effectuée de façon progressive ou par un saut entre deux valeurs de gain. Elle peut être commandée par exemple par un détecteur de signal de parole 40, pour réaliser automatiquement "la commutation de la parole" dans le poste. Lorsqu'un abonné parle devant le microphone 4, sa parole détectée par le détecteur 40 sert à commander un gain normal de l'amplificateur 5. Il en résulte automatiquement pour l'amplificateur 11 un gain $g_1$ de faible valeur et donc un faible signal d'attaque du haut-parleur 8. Lorsque l'abonné cesse de parler devant le microphone 4, le détecteur 40 commande un gain faible de l'amplificateur 5. Il en résulte automatiquement pour l'amplificateur 11 un gain $g_1$ de valeur plus élevée qui détermine un signal d'attaque normal du haut-parleur 8. On peut bien entendu prévoir des réglages manuels à la disposition de l'abonné, pour lui assurer le meilleur confort d'écoute.

Il est aisé de comprendre que la commutation de gains dans les deux voies peut s'effectuer également dans les autres variantes du dispositif de l'invention, à l'aide d'un seul amplificateur. Si un amplificateur à gain réglable du premier trajet $C_1$, commandé par le régulateur 13, est disposé sur l'une des deux voies du poste, il suffit que l'amplificateur à gain réglable servant à la commutation de gain soit disposé sur l'autre voie, entre le transducteur acoustique et la borne commune aux parties distinctes des deux trajets $C_1$ et $C_2$. Par exemple, dans le cas du dispositif de la figure 3a, où l'amplificateur 11' à gain réglable, commandé par le régulateur 13 est disposé sur la voie émission du poste, l'amplificateur à gain réglable utilisé pour la commutation de gain pourrait être disposé sur la voie réception entre la borne de sortie B commune aux deux trajets et le haut-parleur inclus dans le dispositif électro-acoustique 16. Pour la commutation automatique du gain par la parole, on pourrait utiliser la détecteur de parole 40 du microphone. On peut remarquer enfin que dans les dispositifs tels que ceux des figures 3c, 3e et 3f dans lesquels le régulateur 13 ne commande qu'un ou deux amplificateurs à gain variable communs aux deux trajets $C_1$ et $C_2$, on obtient à l'aide d'un amplificateur de commutation de gain disposé sur la voie convenable des variations de gain de sens opposés et ayant automatiquement la même amplitude.

**Revendications**

1. Dispositif destiné à éviter des oscillations entretenues gênantes dans un système bouclé et comportant un amplificateur à gain réglable (11) inséré dans un premier trajet (C1) faisant partie de la boucle dudit système, caractérisé en ce que entre les bornes d'entrée (A) et de sortie (B) du premier trajet est formé un deuxième trajet (C2) ayant au moins une partie qui est distincte du premier trajet, des moyens étant prévus pur que le gain dans le deuxième trajet reste supérieur au gain dans la premier trajet dans toute la bande de fréquences où des oscillations sont susceptibles de se produire, un signal prélevé dans ladite partie du deuxième trajet distincte du premier trajet étant appliqué à l'entrée d'un régulateur linéaire (13) commandant au moins un amplificateur à gain réglable (12) faisant partie du deuxième trajet (C2) de façon à maintenir constant le signal à l'entrée dudit régulateur au-delà d'une certaine valeur dudit signal prélevé dans le deuxième trajet.

2. Dispositif selon la revendication 1, caractérisé en ce que le deuxième trajet (C2) est entièrement distinct du premier trajet (C1) et comporte un amplificateur à gain réglable (12) dont le signal de sortie est appliqué à l'entrée dudit régulateur linéaire (13), ce dernier commandant simultanément ledit amplificateur à gain réglable (12) du deuxième trajet et un amplificateur à gain réglable (11') disposé dans le premier trajet du côté de la borne d'entrée (A) commune aux deux trajets et/ou un amplificateur à gain réglable (11) disposé dans le premier trajet du côté de la borne de sortie (B) commune aux deux trajets.

3. Dispositif selon la revendication 2, caractérisé en ce que le deuxième trajet (C2) est connecté à la borne de sortie (B) commune aux deux trajets (C1 et C2) par l'intermédiaire d'un circuit atténuateur (15).

4. Dispositif selon la revendication 1, caractérisé en ce que le premier et le deuxième trajet (C1 et C2) comportent en commun un amplificateur à gain réglable (11') disposé du côté de la borne d'entrée (A) commune aux deux trajets et/ou un amplificateur à gain réglable (11) disposé du côté de la borne de sortie (B) commune aux deux trajets, l'un et/ou l'autre de ces amplificateurs à gain réglable communs aux deux trajets étant commandé(s) par ledit régulateur linéaire (13).

5. Dispositif selon la revendication 4, dans lequel le premier et le deuxième trajet (C1 et C2) comportent en commun un seul amplificateur à gain réglable (11' ou 11) disposé du côté de la borne d'entrée (A) commune aux deux trajets (ou du côté de la borne de sortie (B) commune aux deux trajets), caractérisé en ce que le premier trajet comporte en outre un autre amplificateur à gain réglable (11 ou 11') qui est disposé du côté de la borne de sortie (B) commune aux deux trajets (ou du côté de la borne d'entrée (A) commune aux deux trajets) et qui est également commandé par ledit régulateur linéaire (13).

6. Dispositif selon la revendication 4 ou 5, caractérisé en ce que le signal prélevé dans la partie du deuxième trajet (C2) distincte du premier trajet (C1) est appliqué à l'entrée du régulateur linéaire (13) par l'intermédiaire d'un amplificateur à gain fixe (12).

7. Dispositif selon la revendication 4 ou 5, caractérisé en ce que le signal prélevé dans la partie du deuxième trajet (C2) distincte du premier trajet (C1) est appliqué à l'entrée du régulateur linéaire (13) par l'intermédiaire d'un amplificateur à gain réglable (12) qui est également commandé par le régulateur linéaire (13).

8. Dispositif selon l'une des revendications 4 à 7, dans lequel le premier et le deuxième trajet (C1, C2) comportent en commun un seul amplificateur à gain réglable (11') qui est situé du côte de la borne d'entrée (A) commune aux deux trajets, caractérisé en ce que le deuxième trajet (C2) est connecté à la borne de sortie (B) commune aux deux trajets, par l'intermédiaire d'un circuit atténuateur (15).

9. Dispositif selon l'une des revendications 4 à 7, dans lequel le premier et le deuxième trajet (C1, C2) comportant en commun un seul amplificateur à gain réglable (11) qui est situé du côté de la borne de sortie (B) commune aux deux trajets, caractérisé en ce que la partie du deuxième trajet distincte du premier trajet est connectée à l'entrée dudit amplificateur commun par l'intermédiaire d'un circuit atténuateur (15).

10. Dispositif selon l'une des revendications 4, 6 et 7, dans lequel le premier et le deuxième trajet (C1, C2) comportent en commun deux amplificateurs à gains réglables (11' et 11) disposés respectivement du côté des bornes d'entrée (A) et de sortie (B) communes aux deux trajets, caractérisé en ce que la partie du deuxième trajet distincte du premier trajet est connectée à l'entrée de l'amplificateur commun (11') qui est disposé du côté de la borne de sortie commune aux deux trajets, par l'intermédiaire d'un circuit atténuateur (15).

11. Dispositif selon l'une des revendications 1 à 10, caractérisé en ce qu'un filtre (17) est connecté dans la partie du deuxième trajet (C2) qui est distincte du premier trajet (C1), avant l'endroit où est prélevé le signal qui est appliqué à l'entrée du régulateur linéaire (13), de façon à augmenter sélectivement le gain dans le deuxième trajet.

12. Dispositif selon la revendication 11, caractérisé en ce que le filtre (17) du deuxième trajet (C2) est un filtre à bande passante étroite.

13. Dispositif selon la revendication 11, caractérisé en ce que le filtre (17) du deuxième trajet (C2) est un filtre passe-haut.

14. Dispositif selon l'une des revendications 11 à 13, caractérisé en ce qu'un filtre (18) est connecté dans la partie du premier trajet (C1) qui est distincte du deuxième trajet (C2), pour augmenter sélectivement le gain du premier trajet dans la même bande de fréquences que la bande passante du filtre du deuxième trajet.

15. Dispositif selon l'une des revendications 11 à 13, caractérisé en ce qu'un filtre (19) est connecté avant la borne d'entrée (A) commune aux deux trajets (C1, C2) ou après la borne de sortie (B) commune aux deux trajets, ou dans les parties communes aux deux trajets, pour augmenter le gain de l'ensemble formé par les deux trajets dans la même bande de fréquences que la bande passante du filtre (17) du deuxième trajet.

16. Dispositif selon l'une des revendications 1 à 15, caractérisé en ce que le régulateur linéaire (13) comporte un modulateur de largeur d'impulsions (30) qui reçoit un signal correspondant au signal appliqué à l'entrée dudit régulateur, un circuit détecteur de dépassement (32) qui engendre une impulsion de compression chaque fois que la largeur des impulsions fournies par le modulateur atteint une valeur indiquant un dépassement du niveau du signal à son entrée, lesdites impulsions de compression étant appliquées à au moins un circuit intégrateur (25') dont le signal de sortie commande l'élément réglable de l'amplificateur ou des amplificateurs à gain réglable commandés par le régulateur.

17. Poste téléphonique à haut-parleur utilisant le dispositif selon l'une des revendications 1 à 16, caractérisé en ce que le circuit de couplage (1) du poste à la ligne téléphonique (2) est inclus dans la partie du premier trajet distincte du deuxième trajet (C2).

18. Poste téléphonique selon la revendication 17, comportant dans le premier trajet (C1) un amplificateur à gain réglable (11) commandé par ledit régulateur linéaire et situé dans la voie réception (6) (ou la voie émission (3)), caractérisé en ce qu'un autre amplificateur à gain réglable (5) servant à la commutation de gain dans les deux voies est disposé sur la voie émission (ou la voie réception) entre le microphone (4) (ou le haut-parleur (8)) et la borne d'entrée (A) (ou la borne de sortie (B)) commune aux parties distinctes du premier et du deuxième trajet, lesdits moyens prévus pour que le gain dans le deuxième trajet reste supérieur au gain dans le premier trajet étant ajustés de façon que la boucle électro-acoustique se refermant par le deuxième trajet (C2) soit en permanence le siège d'oscillations non gênantes de faible amplitude, une variation provoquée du gain dudit autre amplificateur à gain réglable déterminant une variation de gain en sens inverse dans la voie réception (ou émission).

19. Poste téléphonique selon la revendication 18, caractérisé en ce que la variation du gain dudit autre amplificateur (5) est commandée par un détecteur du signal de parole (40) engendré par le microphone (4).

20. Système électro-acoustique bouclé utilisant le dispositif selon l'une des revendications 1 à 16.

21. Système d'asservissement utilisant le dispositif selon l'une des revendications 1 à 16.

## Patentansprüche

1. Schaltungsanordnung zur Vermeidung störender ungedämpfter Schwingungen in einem Schleifensystem, wobei die Anordnung einen Verstärker mit regelbarer Verstärkung (11) in einer ersten Strecke (C1) aufweist, die einen Teil der Schleife des genannten Systems bildet, dadurch gekennzeichnet, dass zwischen den Eingangsklemmen (A) und den Ausgangsklemmen (B) der ersten Strecke einen zweite Strecke (C2) vorgesehen ist, die wenigstens einen Teil hat, der von der ersten Strecke getrennt ist, wobei Mittel vorgesehen sind, um zu gewährleisten, dass die Verstärkung in der zweiten Strecke höher bleibt als die Verstärkung in der ersten Strecke und zwar in dem Gesamtfrequenzbereich, wo die Schwingungen erzeugt werden können, wobei in dem genannten Teil der zweiten Strecke, der von der ersten Strecke getrennt ist, ein Signal gebildet wird, das dem eingang eines linearen Reglers (13) zugeführt wird, der wenigstens einen Verstärker mit regelbarer Verstärkung (12) regelt, der einen Teil der zweiten Strecke (C2) bildet um zu gewährleisten, dass das Signal an dem Eingang des genannten Reglers ständig von einem bestimmten Wert des in der zweiten Strecke gebildeten genannten Signals entfernt bleibt.

2. Schaltungsanordnung nach Anspruch 1, dadurch gekennzeichnet, dass die zweite Strecke (C2) von der ersten Strecke (C1) völlig getrennt ist und einen Verstärker mit regelbarer Verstärkung (12) enthält, dessen Ausgangssignal dem Eingang des genannten linearen Reglers (13) zugeführt wird, wobei dieser lineare Regler gleichzeitig den Verstärker mit regelbarer Verstärkung (12) der zweiten Strecke und einen Verstärker mit regelbarer Verstärkung (11') in der ersten Strecke in der Nähe der Eingangsklemme (A) regelt, welche Klemme den zwei Strecken gemeinsam ist und/oder einen Verstärker mit regelbarer Verstärkung (11) in der ersten Strecke in der Nähe der Ausgangsklemme (B), die den zwei Strecken gemeinsam ist.

3. Schaltungsanordnung nach Anspruch 2, dadurch gekennzeichnet, dass die zweite Strecke (C2) mittels einer Dämpferschaltung (15) mit der Ausgangsklemme (B), die den zwei Strecken (C1 und C2) gemeinsam ist, verbunden ist.

4. Schaltungsanordnung nach Anspruch 1, dadurch gekennzeichnet, dass die erste und die zweite Strecke (C1 und C2) einen gemeinsamen Verstärker mit regelbarer Verstärkung (11') in der Nähe der Eingangsklemme (A), die den zwei Strecken gemeinsam ist enthalten und/oder einen Verstärker mit regelbarer Verstärkung (11), der in der Nähe der Ausgangsklemme (B), die den zwei Strecken gemeinsam ist, vorgesehen ist, wobei der eine oder der andere dieser Verstärker mit regelbarer Verstärkung, die den zwei Strecken gemeinsam sind, durch

27 **0 065 335** 28

den genannten linearen Regler (13) geregelt wird.

5. Schaltungsanordnung nach Anspruch 4, wobei die erste und zweite Strecke (C1 und C2) einen einzigen gemeinsamen Verstärker mit regelbarer Verstärkung (11′ oder 11) enthalten, der in der Nähe der Eingangsklemme (A) vorgesehen ist, die den beiden Strecken gemeinsam ist (oder in der Nähe der Ausgangsklemme (B), die den beiden Strecken gemeinsam ist), dadurch gekennzeichnet, dass die erste Strecke u.a. einen weiteren Verstärker mit regelbarer Verstärkung (11 oder 11′) enthält, der in der Nähe der Ausgangsklemme (B) vorgesehen ist, die den beiden Strecken gemeinsam ist (oder in der Nähe der Eingangsklemme (A), die den beiden Strecken gemeinsam ist) und der ebenfalls von dem genannten linearen Regler (13) geregelt wird.

6. Schaltungsanordnung nach Anspruch 4 oder 5, dadurch gekennzeichnet, dass das in demjenigen Teil der zweiten Strecke (C2) gebildete Signal, der von der ersten Strecke (C1) getrennt ist, mittels eines Verstärkers mit einer festen Verstärkung (12) der Eingangsklemme des linearen Reglers (13) zugeführt wird.

7. Schaltungsanordnung nach Anspruch 4 oder 5, dadurch gekennzeichnet, dass das in demjenigen Teil der zweiten Strecke (C2) gebildete Signal, der von der ersten Strecke (C1) getrennt ist, mittels eines Verstärkers mit regelbarer Verstärkung (12) der Eingangsklemme des linearen Reglers (13) zugeführt wird, welcher Verstärker ebenfalls von dem linearen Regler (13) geregelt wird.

8. Schaltungsanordnung nach einem der Ansprüche 4 bis 7, wobei die erste und zweite Strecke (C1, C2) einen einzigen gemeinsamen Verstärker mit regelbarer Verstärkung (11′) enthalten, der in der Nähe der Eingangsklemme (A), die den zwei Strecken gemeinsam ist, vorgesehen ist, dadurch gekennzeichnet, dass die zweite Strecke (C2) mittels einer Dämpferschaltung (15) mit der Ausgangsklemme (B), die den beiden Strecken gemeinsam ist, verbunden ist.

9. Schaltungsanordnung nach einem der Ansprüche 4 bis 7, wobei die erste und zweite Strecke (C1, C2) einen einzigen gemeinsam Verstärker mit regelbarer Verstärkung (11) enthalten, der in der Nähe der Ausgangsklemme (B), die den beiden Strecken gemeinsam ist, vorgesehen ist, dadurch gekennzeichnet, dass derjenige Teil der zweiten Strecke, der von der ersten Strecke getrennt ist, mittels einer Dämpferschaltung (15) mit der Eingangsklemme des genannten gemeinsamen Verstärkers verbunden ist.

10. Schaltungsanordnung nach Anspruch 4, 6, 7, wobei die erste und zweite Strecke (C1, C2) gemeinsam zwei Verstärker mit regelbarer Verstärkung (11 und 11) enthalten, die in der Nähe der Eingangsklemme (A) bzw. der Ausgangsklemmen (B), die den beiden Strecken gemeinsam sind, vorgesehen sind, dadurch gekennzeichnet, dass derjenige Teil der zweiten Strecke, der von der ersten Strecke getrennt ist, mittels einer Dämpferschaltung (15) mit der Eingangsklemme des gemeinsamen Verstärkers verbunden ist, der in der Nähe der Ausgangsklemme vorgesehen ist, die den beiden Strecken gemeinsam ist.

11. Schaltungsanordnung nach einem der Ansprüche 1 bis 10, dadurch gekennzeichnet, dass in demjenigen Teil der zweiten Strecke (C2), der von der ersten Strecke (C1) getrennt ist, ein Filter (17) vorgesehen ist und zwar vor der Stelle, wo das Signal gebildet wird, das der Eingangsklemme des linearen Reglers (13) zugeführt wird, um die Verstärkung in der ersten Strecke selektiv zu vergrössern.

12. Schaltungsanordnung nach Anspruch 11, dadurch gekennzeichnet, dass das Filter (17) der zweiten Strecke (C2) ein Filter mit einem engen Durchlassbereich ist.

13. Schaltungsanordnung nach Anspruch 11, dadurch gekennzeichnet, dass das Filter (17) der zweiten Strecke (C2) ein Hochpassfilter ist.

14. Schaltungsanordnung nach einem der Ansprüche 11 bis 13, dadurch gekennzeichnet, dass in demjenigen Teil der ersten Strecke (C1), der von der zweiten Strecke (C2) getrennt ist, ein Filter (18) vorgesehen ist und zwar zur selektiven Vergrösserung der Verstärkung der ersten Strecke in demselben Frequenzbereich wie der Durchlassbereich des Filters der zweiten Strecke.

15. Schaltungsanordnung nach einem der Ansprüche 11 bis 13, dadurch gekennzeichnet, dass vor der Eingangsklemme (A), die den beiden Strecken (C1, C2) gemeinsam ist, oder hinter der Ausgangsklemme (B), die den beiden Strecken gemeinsam ist, oder in denjenigen Teilen, die den zweiten Strecken gemeinsam sind, ein Filter (19) vorgesehen ist, und zwar zur Vergrösserung der Verstärkung des Gefüges aus den zwei Strecken in demselben Frequenzbereick wie der Durchlassbereich des Filters (17) der zweiten Strecke.

16. Schaltungsanordnung nach einem der Ansprüche 1 bis 15, dadurch gekennzeichnet, dass der lineare Regler (13) einen Impulsbreitenmodulator (3) enthält, der ein Signal erhält, des demjenigen Signal entspricht, das der Eingangsklemme des genannten Reglers zugeführt wird, weiterhin eine Impulslängendetektionsschaltung (32), die einen Kompressionsimpuls erzeugt und zwar jeweils dann, wenn die Breite der von dem Modulator gelieferten Impulse einen Wert erreicht, der angibt, dass der Pegel des Signals an dem Eingang überschritten wird, wobei die genannten Kompressionsimpulse einem Integrator (25′) zugeführt werden, dessen Ausgangssignals den regelbaren Anteil des Verstärkers bzw. der Verstärker mit regelbarer Verstärkung, der bwz. die von dem Regler geregelt werden, regelt.

17. Lautsprechender Fernsprecher, der die Anordnung nach einem der Ansprüche 1 bis 16 verwendet, dadurch gekennzeichnet, dass die Kopplungsschaltung (1), die den Apparat mit der Fernsprechleitung (2) verbindet, in demjenigen Teil der ersten Strecke liegt, der von der zweiten Strecke (C2) getrennt ist.

18. Fernsprechapparat nach Anspruch 17 mit in der ersten Strecke (C1) einem Verstärker mit regelbarer Verstärkung (11), der von dem genannten linearen Regler geregelt wird und der in der Empfangsstrecke (6) oder in der Übertragungsstrecke (3) liegt, dadurch gekennzeichnet, dass ein weiterer Verstärker mit regelbarer Verstärkung (5), der zum Umschalten der Verstärkung in den zwei Strecken in der Übertragungsstrecke (oder in der Empfangsstrecke) zwischen dem Mikrophon (4) (oder dem Lautsprecher (8)) und der Eingangsklemme (A) (oder der Ausgangsklemme (B)), die den getrennten Teilen der ersten und zweiten Strecke gemeinsam sind, vorgesehen ist, wobei die genannten Mittel, die dazu vorgesehen sind um zu gewährleisten, dass die Verstärkung in der zweiten Strecke höher bleibt als die Verstärkung in der ersten Strecke, derart eingestellt werden, dass die elektroakustische Schleife, die durch die zweite Strecke geschlossen wird, ständig die Quelle nicht störender Schwingungen mit einer geringen Amplitude ist, wobei eine Schwankung, herbeigeführt durch die Verstärkung des genannten weiteren Verstärkers mit regelbarer Verstärkung eine Verstärkungsänderung in der entgegengesetzten Richtung in der Empfangs- (oder Übertragungs)-Strecke ermittelt.

19. Fernsprecher nach Anspruch 18, dadurch gekennzeichet, dass die Änderung in der Verstärkung des genannten weiteren Verstärkers (5) durch einen Sprachsignaldetektor (40) geregelt wird, welches Signal von dem Mikrophon (4) erzeugt wird.

20. Elektroakustisches System mit einer geschlossenen Schleife, wobei de Schaltungsanordnung nach einem der Ansprüche 1 bis 16 verwendet wird.

21. Regelsystem, das die Schaltungsanordnung nach einem der Ansprüche 1 bis 16 verwendet.

## Claims

1. An arrangement for avoiding sustained, annoying oscillations in a closed-loop system, and comprising a variable-gain amplifier (11) incorporated in a first path (C1) which forms part of the loop of the said system, characterized in that between the input (A) and output (B) terminals of the first path there is formed a second path (C2) which has at least one part which is separate from the first path, means being provided to ensure that the gain in the second path remains higher than the gain in the first path in the overall frequency band where the oscillations are liable to be produced, a signal formed in the said part of the second path which is separate from the first path being applied to the input of a linear regulator (13) controlling at least one variable-gain amplifier (12) which forms part of the second path (C2) to ensure that the signal at the input of the said regulator remains constant from a given value of the said signal formed in the second path.

2. An apparatus as claimed in Claim 1, characterized in that the second path (C2) is completely separate from the first path (C1) and comprises a variable-gain amplifier (12) whose output signal is applied to the input of said linear regulator (13), this linear regulator controlling simultaneously the said variable-gain amplifier (12) of the second path near the input terminal (A) which is used jointly by the two paths and/or a variable-gain amplifier (11) provided in the first path near the output terminal which is used jointly by the two paths.

3. An arrangement as claimed in Claim 2, characterized in that the second path (C2) is connected by means of an attenuator circuit (15) to the output terminal (B) which is used jointly by the two paths (C1 and C2).

4. An arrangement as claimed in Claim 1, characterized in that the first and second paths (C1+C2) comprise a common variable-gain amplifier (11') provided near the input terminal (A) which is used jointly by the two paths and/or a variable-gain amplifier (11) provided near the output terminal (B) which is used jointly by the two paths, either the one of the other of these variable-gain amplifiers which are used jointly by the two paths being controlled by said linear regulator (13).

5. An arrangement as claimed in Claim 4, in which the first and second paths (C1+C2) comprise a common single variable-gain amplifier (11' or 11) provided near the input terminal (A) which is used jointly by the two paths (or near the output terminal (B) which is used jointly by the two paths), characterized in that the first path comprises *inter alia* a further variable-gain amplifier (11 or 11') which is provided near the output terminal (B) which is used jointly by the two paths (or near the input terminal (A) which is used jointly by the two paths) and which is also controlled by said linear regulator (13).

6. An arrangement as claimed in Claim 4 or Claim 5, characterized in that the signal formed in that part of the second path (C2) which is separate from the first path (C1) is applied to the input of the linear regulator (13) by means of a fixed-gain amplifier (12).

7. An arrangement as claimed in Claim 4 or Claim 5, characterized in that the signal formed in that part of the second path (C2) which is separate from the first path (C1) is applied to the input of the linear regulator (13) by means of a variable-gain amplifier (12), which is also controlled by the linear regulator (13).

8. An arrangement as claimed in any of the Claims 4 to 7, in which the first and second paths comprise one common single variable-gain amplifier (11') which is provided near the input terminal (A) which is used jointly by the two paths, characterized in that the second path (C2) is connected by means of an attenuator circuit (15) to the output terminal (B) which is used jointly by the two paths.

9. An arrangement as claimed in any of the Claims 4 to 7, in which the first and second paths (C1, C2) comprise a common, single variable-gain amplifier (11) which is situated near the output terminal (B) which is used jointly by the two paths, characterized in that that part of the second path which is separate from the first path is connected to the input of said common amplifier by means of an attenuator circuit (15).

10. An arrangement as claimed in any of the Claims 4, 6, 7, in which the first and second paths (C1, C2) comprise two jointly used variable-gain amplifiers (11' and 11) which are provided near the input (A) and output (B) terminals which are used jointly by the two paths, respectively, characterized in that that part of the second path which is separate from the first path is connected by means of an attenuator circuit (15) to the input of the common amplifier (11') which is provided near the output terminal which is used jointly by the two paths.

11. An arrangement as claimed in any of the Claims 1 to 10, characterized in that a filter (17) is arranged in that part of the second path (C2) which is separate from the first path (C1) before the place where the signal is formed which is applied to the input of the linear regulator (13), so as to selectively increase the gain in the second path.

12. An arrangement as claimed in Claim 11, characterized in that the filter (17) of the second path (C2) is a filter having a narrow passband.

13. An arrangement as claimed in Claim 11, characterized in that the filter (17) of the second path (C2) is a high-pass filter.

14. An arrangement as claimed in any of the Claims 11 to 13, characterized in that a filter (18) is arranged in that part of the first path (C1) which is separate from the second path (C2), for selectively increasing the gain of the first path in the same frequency band as the passband of the filter of the second path.

15. An arrangement as claimed in any of the Claims 11 to 13, characterized in that a filter (19) is provided before the input terminal (A) which is used jointly by the two paths (C1, C2), or after the output terminal (B) which is used jointly by the two paths, or in the parts which are used jointly by the two paths, for increasing the gain of the assembly formed by the two paths in the same frequency band as the passband of the filter (17) of the second path.

16. An arrangement as claimed in any of the Claims 1 to 15, characterized in that the linear regulator (13) comprises a pulse-width modulator (30) which receives a signal which corresponds to the signal applied to the input of the said regulator, a pulse-length detection circuit (32) which produces a compression pulse each time the width of the pulses produced by the modulator reaches a value which indicates that the level of the signal at its input is exceeded, said compression pulses being applied to an integrating circuit (25') the output signal of which controls the variable component of the variable-gain amplifier or amplifiers controlled by the regulator.

17. A loudspeaking telephone set using the arrangement as claimed in any of the Claims 1 to 16, characterized in that the coupling circuit (1) coupling the set to the telephone line (2) is included in that part of the first path which is separate from the second path (C2).

18. A telephone set as claimed in Claim 17, comprising in the first path (C1) a variable-gain amplifier (11) controlled by said linear regulator and arranged in the receiving path (6) (or the transmission path (3)), characterized in that a further variable-gain amplifier (5) having for its function to change-over the gain in the two paths is provided in the transmission path (or the receiving path) between the microphone (4) (or the loudspeaker (8)) and the input terminal (A) (or the output terminal (B)) which are used jointly by the separate parts of the first and the second paths, said means which are provided to ensure that the gain in the second path remains higher than the gain in the first path being adjusted in such a way that the electro-acoustic loop which is closed by the second path (C2) is permanently the source of unannoying oscillations of a weak amplitude, a variation induced by the gain of the said further variable-gain amplifier determining a gain variation in the opposite direction in the receiving (or transmission) path.

19. A telephone set as claimed in Claim 18, characterized in that the variation in the gain of said further amplifier (5) is controlled by a detector detecting the speech signal (40) generated by the microphone (4).

20. A closed-loop electro-acoustic system employing the arrangement as claimed in any of the Claims 1 to 16.

21. A control system employing the arrangement as claimed in any of the Claims 1 to 16.

FIG.1

FIG.2

FIG.3

FIG.4

FIG.5

3

FIG.6